# DEMANDE DE BREVET EUROPEEN

(11) **EP 1 382 862 A1**
(43) Date de publication de la demande: **21.01.2004**
(21) Numéro de dépôt: 03300066.2
(22) Date de dépôt: 17.07.2003
(51) Int. Cl.: F16B 13/08

(54) **Dispositif d'assemblage, ainsi qu'insert et élément fixateur dudit dispositif**

(30) Priorité: 17.07.2002 FR 0209175
(71) Demandeur: Sofrasar SA, 57200 Sarreguemines (FR)
(72) Inventeur: Jeanroy, Bruno, 57070 Vantoux (FR)
(74) Mandataire: Vièl, Frédérique (FR)

(57) **Abrégé**

L'invention concerne un dispositif d'assemblage constitué d'un élément fixateur (21, 41) ayant la forme d'un axe circulaire muni d'au moins un filetage présentant une surface d'appui hélicoïdale (25) inclinée vers le centre de l'élément fixateur (21, 41) en s'éloignant de l'extrémité frontale (24) de l'élément fixateur (21, 41), ledit élément fixateur (21, 41) étant destiné à pénétrer dans un orifice support (23) par son extrémité frontale (24), et d'un insert d'assemblage (22) élastique de forme hélicoïdale orientée dans le même sens que le filetage de l'élément fixateur (21, 41), destiné à être placé entre l'élément fixateur (21, 41) et l'orifice support (23) pour assurer le blocage dudit élément fixateur (21, 41) dans ledit orifice support (23), l'insert (22) étant muni de moyens de blocage (26, 27) destinés à coopérer avec la surface hélicoïdale (25) correspondante de l'élément fixateur (21, 41), les moyens de blocage (26, 27) comprenant la face interne (26) de l'insert hélicoïdal destinée à prendre appui sur la surface d'appui (25) et la face externe (27) de l'insert hélicoïdal destinée à être plaquée contre la paroi de l'orifice (23). La génératrice externe (32) ainsi qu'éventuellement la génératrice interne (33) de l'insert hélicoïdal (22) est/sont inclinée(s) d'un angle (β, β') par rapport à l'axe principal de l'insert.

## Description

L'invention concerne un dispositif d'assemblage constitué d'un élément fixateur ayant la forme d'un axe circulaire muni d'au moins un filetage présentant une surface d'appui hélicoïdale inclinée vers le centre de l'élément fixateur en s'éloignant de l'extrémité frontale de l'élément fixateur, ledit élément fixateur étant destiné à pénétrer dans un orifice support par son extrémité frontale, et d'un insert d'assemblage élastique de forme hélicoïdale orientée dans le même sens que le filetage de l'élément fixateur, destiné à être placé entre l'élément fixateur et l'orifice support pour assurer le blocage dudit élément fixateur dans ledit orifice support, l'insert étant muni de moyens de blocage destinés à coopérer avec la surface hélicoïdale correspondante de l'élément fixateur, les moyens de blocage comprenant la face interne de l'insert hélicoïdal destinée à prendre appui sur la surface d'appui et la face externe de l'insert hélicoïdal destinée à être plaquée contre la paroi de l'orifice, d'un élément fixateur longitudinal et d'un insert d'assemblage destiné à être placé entre l'élément fixateur et un orifice support pour assurer le blocage dudit élément fixateur dans ledit orifice support, l'élément fixateur pénétrant dans l'orifice support par son extrémité frontale.

La fixation de deux pièces l'une par rapport à l'autre fait souvent appel à un dispositif de fixation constitué d'un élément fixateur, par exemple une vis, et d'un insert, par exemple une cheville. L'insert est en général introduit dans l'orifice destiné à recevoir l'élément fixateur avant que ce dernier ne soit vissé ou emmanché en force. Sous l'effet de la pression exercée par le filet de la vis, l'insert se déforme et se plaque contre la paroi latérale de l'orifice support. La vis est ainsi bloquée du seul fait du vissage.

Ce type de fixation nécessite donc de visser l'élément fixateur ou de l'emmancher en force, ce qui entraîne des coûts importants de main d'oeuvre.

On connaît des dispositifs de fixation comprenant un axe fileté et un insert hélicoïdal correspondant. La face interne de l'insert hélicoïdal prend appui sur la face du filetage de l'axe fileté qui est inclinée vers l'intérieur en s'éloignant de la face frontale de l'axe fileté. L'insert hélicoïdal et l'axe fileté sont insérés dans l'orifice, par exemple en les vissant, jusqu'à ce que la tête de l'axe fileté prenne appui contre les bords d'entrée de l'orifice. Une rotation supplémentaire provoque l'extension radiale de l'insert dans l'orifice et ainsi le blocage de l'axe fileté.

De tels dispositifs sont connus des documents US 4,712,955 A, US 3,967,525 A, JP 09 287605 A et de AU 541 499 B.

Ces dispositifs sont tous prévus pour des orifices cylindriques. Cependant, il est courant que les orifices soient préfabriqués lors du moulage de la pièce. Ces orifices prémoulés ont alors une forme légèrement conique pour permettre le démoulage. Il n'est pas possible d'utiliser les dispositifs de l'état de la technique dans ces orifices coniques.

Par ailleurs, lorsque la fixation est réalisée en exerçant une rotation sur l'axe fileté, seule une extrémité de l'axe fileté peut être vissée dans un premier orifice. Il n'est donc pas possible de fixer entre elles deux pièces munies chacune d'un orifice à l'aide d'un tel dispositif.

L'objectif de l'invention est donc de développer un dispositif du type de celui présenté au préambule qui puisse être utilisé aussi bien dans les orifices cylindriques que dans les orifices coniques et qui soit simple à installer tout en assurant une résistance à l'extraction importante.

Cet objectif est atteint par le dispositif de fixation selon l'invention dans lequel la génératrice externe au moins de l'insert hélicoïdal est inclinée d'un angle (β) par rapport à son axe principal. Grâce à son élasticité propre, l'insert s'adapte aussi bien aux orifices cylindriques qu'aux orifices coniques. Il est préférable que la génératrice interne de l'insert hélicoïdal est incliné d'un angle (β') par rapport à son axe principal. L'angle d'inclinaison de la génératrice externe et celui de la génératrice interne peuvent être identiques ou non. La forme conique de l'insert permet une introduction plus facile du dispositif dans l'orifice. Muni de son insert, l'axe fileté est introduit dans l'orifice en exerçant une pression dessus. Le blocage de l'axe fileté dans l'orifice peut être réalisé en le tournant légèrement dans le sens du vissage, ce qui provoque une légère translation de la surface d'appui hélicoïdale sans pour autant translater l'axe fileté lui-même. Il peut également être réalisé lorsqu'une traction vers l'extérieur est exercée sur l'axe fileté, ce qui provoque le glissement de la surface d'appui hélicoïdale sur la face interne de l'insert et le plaquage de celui-ci contre la paroi de l'orifice.

Afin d'assurer une surface de fixation maximale, il est préférable que la face interne et la face externe de l'insert aient des inclinaisons opposées par rapport à son axe principal, de sorte qu'en coupe elles forment les deux branches d'un V. La face interne de l'insert a de préférence une inclinaison proche de celle de la surface d'appui avec laquelle elle doit coopérer tandis que la face externe a une inclinaison opposée de telle sorte qu'elle s'écarte de l'axe de la vis en s'éloignant de l'extrémité frontale de cette dernière. L'insert peut être dimensionné de telle sorte que lors du blocage, pratiquement toute la surface externe d'un tronçon au moins de l'insert se plaque contre la paroi de l'orifice. Cette configuration permet une bonne maîtrise des surfaces d'appui linéaire avec une répartition optimale des efforts.

Afin d'empêcher le glissement de l'insert par rapport à l'élément fixateur lors de l'introduction du dispositif de fixation dans l'orifice support, l'élément fixateur et / ou l'insert sont de préférence munis de moyens de retenue, par exemple d'un épaulement placé sur l'élément fixateur situé derrière chaque surface d'appui hélicoïdale et d'une surface d'épaulement correspondante placée sur l'insert.

Pour empêcher l'insert de glisser par rapport à la paroi de l'orifice lorsqu'une traction est exercée sur l'élément fixateur dans le sens de son extraction, l'insert est de préférence muni d'une surface de contact, formée par exemple des lèvres radiales, dimensionnée de telle sorte qu'une fois le dispositif d'assemblage introduit dans l'orifice support, elle empêche l'insert de glisser vers l'extérieur tout en ne gênant pas l'introduction du dispositif d'assemblage dans l'orifice.

L'invention concerne également un insert et un élément fixateur pour dispositif d'assemblage selon l'invention. L'insert est conformé de telle sorte que la génératrice externe ainsi qu'éventuellement la génératrice interne de l'insert hélicoïdal est/sont inclinée(s) d'un angle (β, β') par rapport à l'axe principal de l'insert. En coupe, la face interne et la face externe de l'insert peuvent être inclinées l'une par rapport à l'autre, la face interne s'approchant du centre de l'insert lorsque la face externe s'en éloigne.

Pour permettre l'assemblage de deux pièces, il est prévu un élément fixateur double muni de d'un filetage à chacune de ses extrémités.

Deux exemples de réalisation sont présentés ci-après à l'aide des figures suivantes :
- Figure 1 :: schéma de principe du dispositif selon l'invention ;
- Figure 2 :: vue de côté d'un élément fixateur muni de moyens de blocage ;
- Figure 3 :: vue de côté en coupe d'un insert hélicoïdal conforme à l'invention muni de moyens de blocage ;

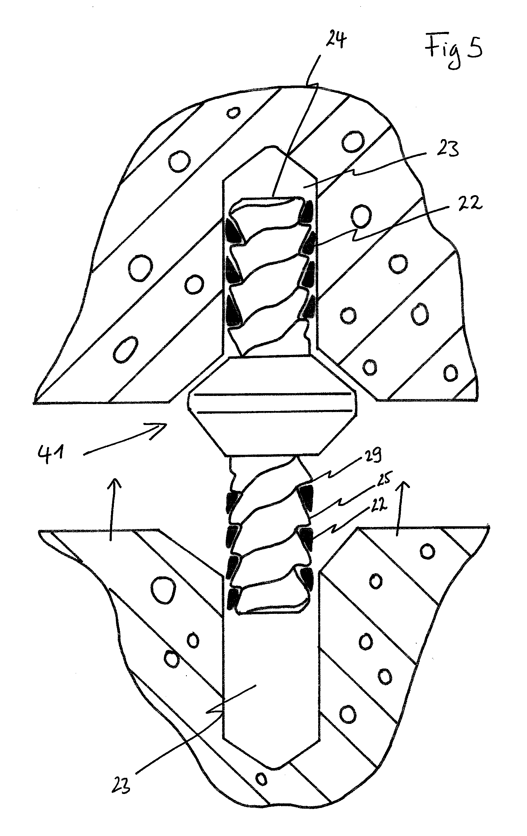

- Figure 4a et 4b: : vue en coupe d'un élément fixateur selon la figure 2 muni d'un insert selon la figure 3 (a) avant et (b) après blocage.
- Figure 5 :: vue d'un élément fixateur double pour la fixation de deux pièces par brochage.

Le dispositif de fixation selon l'invention est composé principalement d'un élément fixateur (21, 41) et d'un insert (22). L'insert (22) est placé sur l'élément fixateur (21, 41) avant que celui-ci ne soit introduit dans l'orifice support (23) dans lequel il doit être bloqué. L'élément fixateur a une extrémité frontale (24) qui pénètre dans l'orifice support (23) et qui servira par la suite comme référence d'orientation.

L'élément fixateur (21, 41) se présente sous la forme d'un axe circulaire muni d'un filet dont la paroi arrière forme une surface d'appui (25) hélicoïdale. Cette surface d'appui (25) est inclinée vers l'intérieur en s'éloignant de l'extrémité frontale (24).

L'insert (22) présente une face interne (26) qui prendra appui sur la surface d'appui (25) de l'élément fixateur (21, 41) et une surface externe (27) destinée à être plaquée au moins partiellement sur la paroi de l'orifice (23).

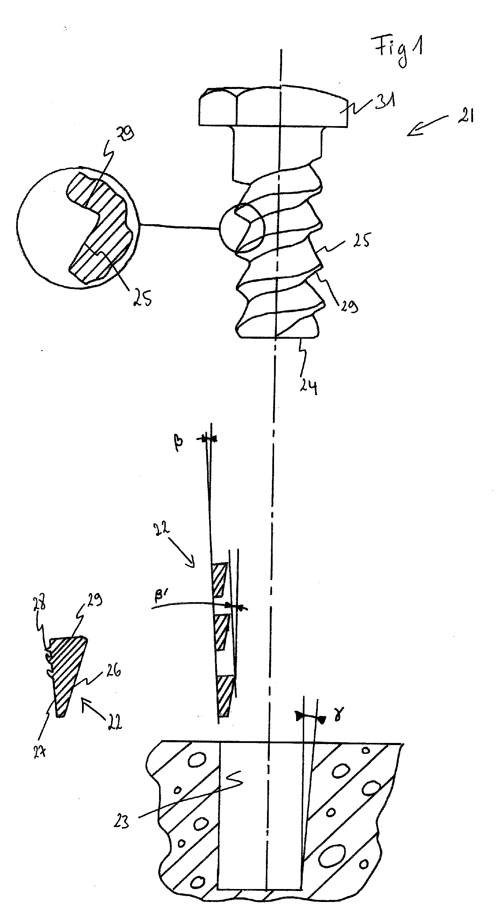

La génératrice extérieure (32) de l'insert (22) est inclinée d'un angle (β) par rapport à l'axe principal de l'insert (22) et donc celui de l'élément fixateur (21). L'insert (22) a donc une forme externe conique s'élargissant en s'éloignant de la face frontale (24) de l'élément fixateur (21). La génératrice interne (33) de l'insert (22) peut également être inclinée d'un angle (β') par rapport à l'axe principal de l'insert (22). Les angles (β, β') des génératrices peuvent être identiques comme sur la figure 1 ou différents. Ils sont en général compris entre 1° et 5°.

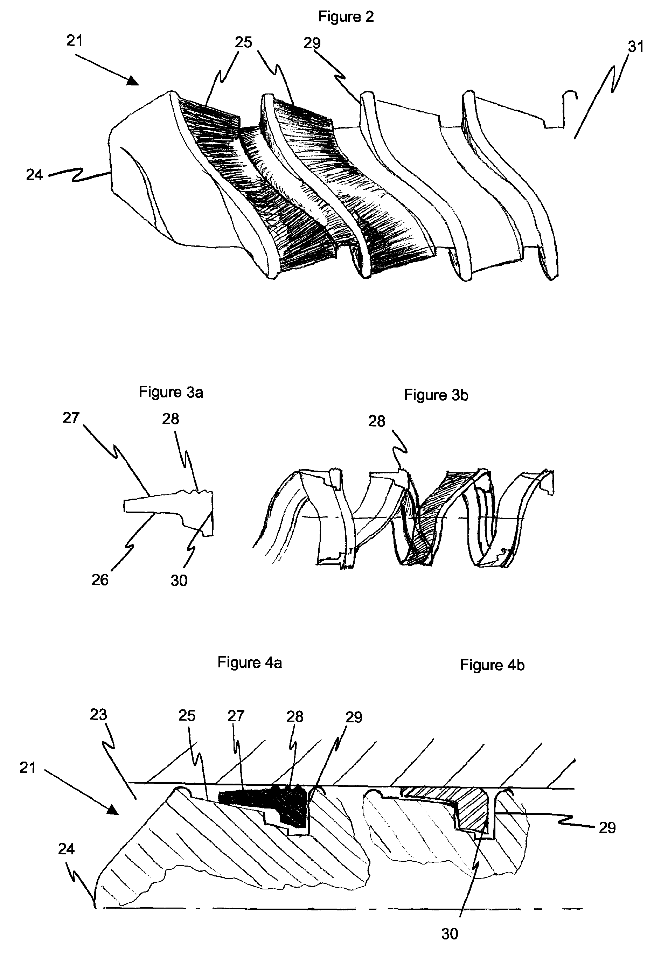

Il est ainsi possible d'utiliser le dispositif selon l'invention dans des orifices cylindriques comme celui montré sur la gauche de la figure 1 ou à la figure 3 que dans les orifices coniques, comme ceux obtenus sur les pièces moulées, comme celui montré sur la droite de la figure 1 avec un angle (γ) de démoulage.

L'insert hélicoïdal (22) est de préférence fabriqué dans un matériau élastique qui peut se déformer sous l'effet du glissement de la surface d'appui (25). Le matériau choisi pourra se comprimer ou se mater. On pourra choisir par exemple un fritté métallique ou une matière plastique, notamment un thermoplastique dont la fluidité sera choisie en fonction du matériau dans lequel l'orifice est réalisé.

Grâce à son élasticité propre, l'insert se rétracte dans le filet de l'élément fixateur (21) au moment de l'introduction lorsque le diamètre de l'orifice se rétrécit.

La surface interne (26) et la surface externe (27) de l'insert (22) sont inclinées l'une par rapport à l'autre. La face interne se rapproche du centre de l'insert (22) lorsque la surface externe (27) s'en éloigne légèrement.

L'insert (22) est dimensionné de telle sorte qu'en position d'utilisation il est au moins partiellement en contact avec la paroi de l'orifice (23) de sorte qu'il ne peut plus ressortir lorsqu'une traction est exercée sur l'élément fixateur (21, 41). Pour cela, il pourra présenter une surface de contact (28) suffisamment grande pour amorcer le blocage mais pas trop importante pour permettre l'introduction facile du dispositif de fixation dans l'orifice (23). Cette surface de contact peut être réalisée par des lèvres radiales comme le montre un agrandissement de la figure 1 ou par un renflement situé à l'arrière de la surface externe (27) comme sur la figure 2.

Avant la mise en place du dispositif de fixation dans l'orifice, l'insert (22) est placé sur l'élément fixateur (21, 41). Le cône de l'insert est orienté de telle sorte qu'il s'élargisse en s'éloignant de la face frontale (24) de l'élément fixateur (21, 41). L'ensemble est ensuite introduit dans l'orifice (23) en exerçant une pression dessus. L'introduction du dispositif dans l'orifice n'est gênée que par les surfaces de contact (28) de l'insert (22), mais celles-ci ont été dimensionnées pour que cette gêne soit minime.

Pour empêcher l'insert (22) de glisser vers l'arrière de l'élément fixateur (21, 41) lors de l'introduction du dispositif de fixation dans l'orifice (23), il est prévu des épaulements (29) derrière chaque surface d'appui (25) de l'élément fixateur (21, 41). La paroi avant du filet, sensiblement radiale, joue ce rôle d'épaulement (29). L'insert (22) est lui-même muni d'une surface d'épaulement (30) correspondante.

Le blocage de l'élément fixateur (21) dans l'orifice (23) peut être réalisé de deux façons distinctes. La première consiste à exercer une traction sur l'extrémité libre (31) de l'élément fixateur (21). Cette traction provoque le retrait de l'élément fixateur (21) et le glissement de la surface d'appui (25) par rapport à la face interne (26) de l'insert (22). La paroi comprise entre la face interne (26) et la face externe (27) se déforme et provoque le plaquage de cette dernière sur la paroi de l'orifice (23). L'élément fixateur (21) se trouve alors bloqué dans l'orifice (23). Ce blocage peut être réalisé par le monteur pour maîtriser l'effort de placage. Cependant, cette traction de blocage peut être réalisée plus tard lors d'une sollicitation sur l'élément fixateur. Dans ce cas, le dispositif est auto-bloquant.

Le blocage peut également être provoqué en tournant légèrement l'élément fixateur (21) dans le sens du vissage sans pour autant le déplacer par rapport à l'orifice (23). La surface d'appui (25) subit une translation relative vers l'extérieur tandis que l'élément fixateur lui-même n'est pas translaté. L'insert (22) étant bloqué dans l'orifice par sa surface de contact (28) il ne suit pas le mouvement de l'élément fixateur (21). Par contre, la surface interne (26) de l'insert (22) glisse sur la surface d'appui (25) en se déformant de sorte que la face externe (27) se plaque contre la paroi de l'orifice (23). Ce procédé permet de contrôler l'effort de placage.

Dans les exemples de réalisation présentés ici, le placage de la surface extérieure (27) est dû au fait que l'insert est élastique. Cependant, d'autres procédés pourraient être utilisés pour provoquer le placage de la face externe (27) contre la paroi de l'orifice, par exemple le pivotement de languettes.

La surface de contact entre l'insert (22) et la paroi de l'orifice (23) est ainsi augmentée de façon conséquente et bloque l'élément fixateur (21, 41) dans l'orifice (23). En choisissant des inclinaisons opposées pour la face interne (26) et la face externe (27) de l'insert (22), on obtient une surface de contact linéaire et une adhérence par collage.

Les surfaces internes (26) et externes (27) de l'insert (22) jouent le rôle de moyens de blocage.

Il est préférable que l'insert hélicoïdal (22) soit conformé de telle sorte qu'en position de blocage la face interne (26) s'appuie sur la surface d'appui (25) tandis que la face externe (27) s'appuie pratiquement sur toute sa surface sur la paroi de l'orifice (23). Pour cela, la surface interne (26) et la surface externe (27) seront, en position non montée, inclinées l'une par rapport à l'autre, la surface interne s'inclinant vers le centre de l'insert (22) lorsque la surface externe (27) s'en éloigne.

Un tel dispositif d'assemblage peut également être utilisé pour assembler deux pièces munies chacune d'un orifice de fixation (23), notamment deux voussoirs d'un tunnel. Dans ce cas, l'élément fixateur (41) sera muni d'un second filetage formant une seconde surface d'appui (25) placée symétriquement à la première sur l'extrémité libre (31) comme le montre la figure 5.

Si l'élément fixateur (41) doit être bloqué par vissage, le deuxième filet devra être orienté dans le sens opposé au premier.

Si la fixation doit être réalisée par traction vers l'extérieur, les deux filetages pourront avoir la même orientation. Cela aura l'avantage qu'il ne sera pas nécessaire d'avoir des inserts de deux orientations différentes. Cette solution permet d'assembler deux pièces simplement en les rapprochant : si une traction est exercée sur l'une des pièces, les deux inserts se coinceront automatiquement assurant ainsi l'assemblage des deux pièces.

Grâce à un tel élément fixateur double (41), il est donc possible de fixer entre elles deux pièces munies chacune d'un orifice.

Un tel dispositif permet une fixation inviolable, car une fois mis en place, le dispositif de fixation ne peut plus être extrait de l'orifice sans être détruit.

Il peut être utilisé aussi bien dans les trous cylindriques que dans les trous coniques.

Le principe de montage auto-bloquant de l'insert hélicoïdal autorise un assemblage par brochage, par emmanchement simultané ou par clipsage, sans autre opération que le rapprochement des deux pièces à assembler.

Le dispositif d'assemblage selon l'invention est particulièrement performant tout en étant simple à mettre en oeuvre. Il ne nécessite pas d'outils particuliers lors de son utilisation. Les différents composants sont simples à réaliser.

### Liste des références

- 21: Elément fixateur
- 22: Insert
- 23: Orifice
- 24: Extrémité frontale
- 25: Surface d'appui
- 26: Face interne
- 27: Face externe
- 28: Surface de contact
- 29: Epaulement
- 30: Surface d'épaulement
- 31: Extrémité libre
- 32: Génératrice extérieure de l'insert
- 33: Génératrice intérieure de l'insert
- 41: Elément fixateur double

## Revendications

1. Dispositif d'assemblage constitué
• d'un élément fixateur (21, 41) ayant la forme d'un axe circulaire muni d'au moins un filetage présentant une surface d'appui hélicoïdale (25) inclinée vers le centre de l'élément fixateur (21, 41) en s'éloignant de l'extrémité frontale (24) de l'élément fixateur (21, 41), ledit élément fixateur (21, 41) étant destiné à pénétrer dans un orifice support (23) par son extrémité frontale (24), et
• d'un insert d'assemblage (22) élastique de forme hélicoïdale orientée dans le même sens que le filetage de l'élément fixateur (21, 41), destiné à être placé entre l'élément fixateur (21, 41) et l'orifice support (23) pour assurer le blocage dudit élément fixateur (21, 41) dans ledit orifice support (23),
• l'insert (22) étant muni de moyens de blocage (26, 27) destinés à coopérer avec la surface hélicoïdale (25) correspondante de l'élément fixateur (21, 41), les moyens de blocage (26, 27) comprenant la face interne (26) de l'insert hélicoïdal destinée à prendre appui sur la surface d'appui (25) et la face externe (27) de l'insert hélicoïdal destinée à être plaquée contre la paroi de l'orifice (23),
**caractérisé en ce que** la génératrice externe (32) ainsi qu'éventuellement la génératrice interne (33) de l'insert hélicoïdal (22) est/sont inclinée(s) d'un angle (β, β') par rapport à l'axe principal de l'insert.

2. Dispositif d'assemblage selon la revendication 1, **caractérisé en ce que** la face interne (26) et la face externe (27) de l'insert (22) ont des inclinaisons opposées par rapport à l'axe principal de l'insert (22), de sorte qu'en coupe elles forment les deux branches d'un V.

3. Dispositif d'assemblage selon la revendication 1, **caractérisé en ce que** l'élément fixateur (21, 41) et / ou l'insert (22) sont munis de moyens de retenue pour empêcher l'insert (22) de glisser le long de l'élément fixateur (21, 41) lors de l'introduction du dispositif d'assemblage dans l'orifice (23).

4. Dispositif d'assemblage selon la revendication 3, **caractérisé en ce que** les moyens de retenue sont constitués notamment d'un ou plusieurs épaulements (29) situés derrière la surface d'appui (25) de l'élément fixateur et / ou d'une ou plusieurs surfaces d'épaulement (30) destinées à prendre appui sur l'élément fixateur (21, 41).

5. Dispositif d'assemblage selon la revendication 1, **caractérisé en ce que** l'insert (22) est muni d'une surface de contact (28), formée par exemple par des lèvres radiales, dimensionnée de telle sorte qu'une fois le dispositif d'assemblage introduit dans l'orifice support (23), elle empêche l'insert (22) de glisser par rapport à la paroi de l'orifice (23) lorsqu'une traction est exercée sur l'élément fixateur (21, 41) dans le sens de son extraction tout en ne gênant pas l'introduction du dispositif d'assemblage dans l'orifice (23).

6. Insert d'assemblage (22) élastique de forme hélicoïdale pour dispositif d'assemblage selon l'une des revendications 1 à 5, muni de moyens de blocage (26, 27) destinés à coopérer avec la surface d'appui hélicoïdale (25) correspondante d'un élément fixateur (21, 41), les moyens de blocage (26, 27) comprenant la face interne (26) de l'insert hélicoïdal destinée à prendre appui sur ladite surface d'appui hélicoïdale (25) et la face externe (27) de l'insert hélicoïdal destinée à être plaquée contre la paroi d'un orifice (23), **caractérisé en ce que** la génératrice externe ainsi qu'éventuellement la génératrice interne de l'insert hélicoïdal est/sont inclinée(s) d'un angle (β, β') par rapport à l'axe principal de l'insert (22).

7. Insert d'assemblage selon la revendication précédente, **caractérisé en ce qu'**il est réalisé dans un matériau thermoplastique ou dans un fritté métallique.

8. Insert d'assemblage (22) selon la revendication 6 ou 7, **caractérisé en ce que** la face interne (26) et la face externe (27) de l'insert (22) ont des inclinaisons opposées par rapport à l'axe principal de l'insert (22), de sorte qu'en coupe elles forment les deux branches d'un V.

9. Insert d'assemblage (22) selon l'une des revendications 6 à 8, **caractérisé en ce qu'**il est muni de moyens de retenue, pour empêcher l'insert (22) de glisser le long de l'élément fixateur (21, 41) lors de l'introduction du dispositif d'assemblage dans un orifice (23), lesdits moyens de retenue pouvant être constitués d'une surface d'appui (30) destinée à prendre appui contre un épaulement (29) correspondant positionné sur l'élément fixateur (21, 41).

10. Elément fixateur (1, 21, 41) pour dispositif d'assemblage selon l'une des revendications 1 à 5, ayant la forme d'un axe circulaire muni d'au moins un filetage présentant une surface d'appui hélicoïdale (25) inclinée vers le centre de l'élément fixateur (21, 41) en s'éloignant de l'extrémité frontale (24) de l'élément fixateur (21, 41), **caractérisé en ce qu'**il présente un filetage à chacune de ses extrémités.
